# EUROPEAN PATENT APPLICATION

(11) **EP 4 435 944 A1**
(43) Date of publication of application: **25.09.2024**
(21) Application number: 21969414.8
(22) Date of filing: 29.12.2021
(51) Int. Cl.: H01M 50/20, H01M 50/242

(54) **BATTERY PROTECTION STRUCTURE, BATTERY, ELECTRIC DEVICE, AND METHOD AND APPARATUS FOR MANUFACTURING BATTERY**

(71) Applicant: Contemporary Amperex Technology Co., Limited, Ningde, Fujian 352100 (CN)
(72) Inventor: KE, Qingpeng, Ningde, Fujian 352100 (CN)
(74) Representative: Thoma, Michael
(86) International application number: PCT/CN2021/142448
(87) International publication number: WO 2023/123041

(57) **Abstract**

Embodiments of the present application relate to the technical field of batteries, and provide a battery protective structure, a battery, a power consuming device, and a method and apparatus for manufacturing a battery. The battery protective structure comprises: a base plate, the base plate including a first surface and a second surface, wherein the first surface is used for the arrangement of a plurality of battery cells, the battery cells each include a plurality of side walls, and the plurality of side walls are configured to be perpendicular to the base plate; and a force transferring member disposed on the base plate, one end of the force transferring member being joined to the second surface and the other end of the force transferring member extending in a direction away from the second surface; wherein the joint between the force transferring member and the second surface is configured to correspond to at least part of the side walls in an arrangement direction of the first surface and the second surface. In this way, an impact force of a ball impact on the bottom can be transferred to the less deformable side walls of the battery cell by means of the force transferring member, thus preventing an internal short-circuit of the battery caused by the ball impact on the bottom and improving safety of the battery.

## Description

### Technical Field

Embodiments of the present application relate to the technical field of batteries, and in particular to a battery protective structure, a battery, a power consuming device, and a method and apparatus for manufacturing a battery.

### Background Art

Lithium-ion batteries are widely used in recent years in electronic devices such as computers and mobile phones and in traction battery systems of new energy vehicles due to their high energy density, high power density, long life and environmental friendliness.

In a new energy vehicle, the battery is typically installed underneath the vehicle. The bottom surface of the battery is large and not protected by the body structure, making it vulnerable to scrapes and impacts during driving, which is commonly referred to as "scraping the bottom" or "ball impact on the bottom". Due to the limited space inside a battery, the gap between a base plate of the battery and battery cells is small. The occurrence of a ball impact on the bottom can easily result in the deformation of the battery cells, leading to an internal short-circuit, fire or even explosion, endangering life and property. Therefore, how to protect the bottom of the battery is an urgent problem to be solved.

### Summary of the Invention

In view of the above problems, embodiments of the present application provide a battery protective structure, a battery, a power consuming device and a method and apparatus for manufacturing a battery, which can prevent deformation of a battery cell, reduce the probability of an internal short-circuit occurring in the battery cell and improve safety performance of the battery.

According to a first aspect of embodiments of the present application, provided is a battery protective structure, including: a base plate, the base plate including a first surface and a second surface, wherein the first surface is used for the arrangement of a plurality of battery cells, the battery cells each include a plurality of side walls, and the plurality of side walls are configured to be perpendicular to the base plate; and a force transferring member, disposed on the base plate, one end of the force transferring member being joined to the second surface and the other end of the force transferring member extending in a direction away from the second surface; wherein a joint between the force transferring member and the second surface is configured to correspond to at least part of the side walls in an arrangement direction of the first surface and the second surface.

According to the embodiments of the present application, the force transferring member is disposed on the side, facing away from the battery cells, of the base plate on which the battery cells are arranged, and the position of the force transferring member corresponds to at least part of side walls of the battery cell that are perpendicular to the base plate, so that an impact force of a ball impact on the bottom can be transferred to a corner between the side wall and a bottom wall of the battery cell through the force transferring member. As the side wall perpendicular to the base plate provides a great rigidity to the corner between the side wall and the bottom wall, the side wall is less prone to deformation after the impact force is transferred to the side wall through this corner, thus preventing the internal short-circuit of the battery caused by the ball impact on the bottom, and improving safety of the battery.

In some embodiments, a first projection, of the joint between the force transferring member and the second surface, on the first surface covers a second projection, of the at least part of side walls, on the first surface.

Since the first projection, of the joint between the force transferring member and the second surface, on the first surface covers the second projection, of the at least part of side walls, on the first surface, the impact force transferred to the joint between the force transferring member and the second surface can be transferred to the side wall corresponding to the force transferring member, thus avoiding the circumstance that the impact force directly impacts the bottom wall of the battery cell parallel to the base plate to deform the bottom wall to lead to an internal short-circuit of the battery.

In some embodiments, in a first direction, the center of the first projection, of the joint between the force transferring member and the second surface, on the first surface is offset from the outer edge of the second projection, of the at least part of side walls, on the first surface by a distance L, where 0 ≤ L ≤ 10 mm, and the first direction is parallel to the first surface.

In the case of 0 ≤ L ≤ 10 mm, it is possible to ensure that there is no offset or a small offset between the center of the first projection and the outer edge of the second projection, so that a force transferring position between the force transferring member and the side wall can be located in the center of the force transferring member in the first direction or closer to the center, thereby improving the rigidity of the force transferring member, making the force transferring member less prone to deformation and ensuring the force transferring effect.

In some embodiments, a first included angle *θ*₁, is formed between the force transferring member and the base plate, the first included angle *θ*₁ satisfying: 30° ≤ *θ*₁ ≤ 60°.

By setting the first included angle *θ*₁ in the range of 30°~60°, most or all of the impact force can be transferred to the side wall via the force transferring member, thus improving the effectiveness of transferring the impact force.

In some embodiments, the force transferring member has an inverted V-shaped structure.

The inverted V-shaped structure has a lower end larger in size than the upper end. Due to the large size of the lower end, a larger region of the bottom of the battery can be covered, and thus the impact force applied on the bottom of the battery is transferred as much as possible to the side wall. The upper end of the inverted V-shaped structure has a small size, which allows the impact force to be concentrated and transferred to the corresponding side wall.

In some embodiments, the force transferring member includes a first force transferring portion and a second force transferring portion separately connected to the second surface, and a projection of a junction between the first force transferring portion, the second force transferring portion and the second surface covers the second projection, of the at least part of side walls, on the first surface.

The impact force is transferred to the base plate by means of the first force transferring portion and the second force transferring portion, respectively. Since the projection of the junction between the first force transferring portion, the second force transferring portion and the second surface covers the second projection, of the at least part of side walls, on the first surface, the impact force transferred to the junction of the first force transferring portion, the second force transferring portion and the second surface on the base plate can be transferred to the side wall corresponding to the force transferring member, thus avoiding the circumstance that the impact force directly impacts the bottom wall of the battery cell parallel to the base plate to deform the bottom wall to lead to an internal short-circuit of the battery.

In some embodiments, the force transferring member further includes a reinforcing portion, the reinforcing portion being disposed between the first force transferring portion and the second force transferring portion and connected to the first force transferring portion and the second force transferring portion.

Since the reinforcing portion is disposed between the first force transferring portion and the second force transferring portion, the rigidity of the force transferring member can be increased to enable the force transferring member to be less prone to deformation, for example, to prevent the force transferring member from being flattened under a high impact force, thereby ensuring the force transferring effect.

In some embodiments, a plurality of force transferring members are disposed in a first direction, a distance between two adjacent force transferring members is less than or equal to 1/3 of a dimension of the battery cell in the first direction, and the first direction is parallel to the first surface.

Since the distance between two adjacent force transferring members is less than or equal to 1/3 of a dimension of the battery cell in the first direction, the area of the region covered by the lower end of the force transferring member is greater than or equal to 2/3 of the area of the bottom wall of the battery cell, so that the force transferring member can transfer most of the impact force of the ball impact on the bottom that is exerted on the bottom region of the battery.

In some embodiments, the joint between the force transferring member and the second surface is configured to correspond to a first side wall with the smaller area of the plurality of the side walls.

Since the joint between the force transferring member and the second surface is configured to correspond to the first side wall with a smaller area of the plurality of the side walls, the impact force of the ball impact on the bottom that is exerted on the bottom region of the battery is transferred to the first side wall with a smaller area, the first side wall with a smaller area is less prone to deformation when subjected to a force than a side wall with a larger area, thus improving safety of the battery. Moreover, a small number of force transferring members can be provided, making the structure simple and cost saving.

In some embodiments, a material of the battery protective structure includes a resin-based composite.

By using the resin-based composite as a material for the battery protective structure, the rigidity of the battery protective structure can be improved, the force transferring member is less prone to deformation, and thus the force transferring effect is ensured.

In some embodiments, the battery protective structure has a thermal conductivity less than or equal to 0.5 W/(m·K).

Since the battery protective structure has a thermal conductivity less than or equal to 0.5 W/(m K), the battery protective structure has some thermal insulation properties, and in the case that a thermal management component is disposed between the battery cell and the battery protective structure, the thermal management efficiency of the thermal management component can be ensured.

According to a second aspect of embodiments of the present application, provided is a battery, including a plurality of battery cells and a battery protective structure in the foregoing embodiments. The battery cells are disposed on the first surface.

In some embodiments, the battery further includes a thermal management component, the thermal management component being disposed between the battery protective structure and the plurality of battery cells.

Since the thermal management component is disposed between the battery protective structure and the plurality of battery cells, the battery cells can be subjected to thermal management, for example, the battery cells can be cooled.

According to a third aspect of embodiments of the present application, provided is a power consuming device, including a battery in the foregoing embodiments, the battery being configured to provide electrical energy.

According to a fourth aspect of embodiments of the present application, provided is a method for manufacturing a battery, including: providing a base plate, the base plate including a first surface and a second surface; providing a plurality of battery cells, the battery cells each including a plurality of side walls; providing a force transferring member; arranging the force transferring member on the base plate, one end of the force transferring member being joined to the second surface and the other end of the force transferring member extending in a direction away from the second surface; and arranging the plurality of battery cells on the first surface to enable the side walls of the battery cells to be perpendicular to the base plate, and enable a joint between the force transferring member and the second surface to correspond to at least part of the side walls in an arrangement direction of the first surface and the second surface.

According to a fifth aspect of embodiments of the present application, provided is an apparatus for manufacturing a battery, including: a first provision device, configured to provide a base plate, the base plate including a first surface and a second surface; a second provision device, configured to provide a plurality of battery cells, the battery cells each including a plurality of side walls; a third provision device, configured to provide a force transferring member; a first assembling device, configured to arrange the force transferring member on the base plate, one end of the force transferring member being joined to the second surface and the other end of the force transferring member extending in a direction away from the second surface; and a second assembling device, configured to arrange the plurality of battery cells on the first surface to enable the side walls of the battery cells to be perpendicular to the base plate, and enable a joint between the force transferring member and the second surface to correspond to at least part of the side walls in an arrangement direction of the first surface and the second surface.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Brief Description of the Drawings

Features, advantages, and technical effects of exemplary embodiments of the present application will be described below with reference to accompanying drawings.
FIG. 1 is a schematic structural diagram of a vehicle according to some embodiments of the present application;
FIG. 2 is a schematic exploded view of a battery according to some embodiments of the present application;
FIG. 3 is a schematic structural diagram of a battery module shown in FIG. 2;
FIG. 4 is a schematic diagram of a combination of a battery protective structure and battery cells according to some embodiments of the present application;
FIG. 5 is a schematic structural diagram of a battery protective structure according to some embodiments of the present application;
FIG. 6 is a schematic structural diagram of a battery protective structure according to some embodiments of the present application in another view;
FIG. 7 is a schematic front view of a combination of a battery protective structure and battery cells according to some embodiments of the present application;
FIG. 8 is an enlarged view of part A in FIG. 7;
FIG. 9 is a schematic diagram of a combination of a battery protective structure and battery cells according to some embodiments of the present application;
FIG. 10 is a schematic front view of a combination of a battery protective structure and battery cells according to some embodiments of the present application;
FIG. 11 is a partial schematic diagram of FIG. 10;
FIG. 12 is a schematic cross-sectional view of a force transferring member according to some embodiments of the present application;
FIG. 13 is a schematic exploded view of a battery protective structure according to some embodiments of the present application;
FIG. 14 is a schematic exploded view of a battery protective structure according to some embodiments of the present application;
FIG. 15 is a schematic exploded view of a battery protective structure according to some embodiments of the present application;
FIG. 16 is a schematic exploded view of a battery according to some embodiments of the present application;
FIG. 17 is a schematic flowchart of a method for manufacturing a battery according to some embodiments of the present application; and
FIG. 18 is a schematic structural diagram of an apparatus for manufacturing a battery according to some embodiments of the present application.

In the drawings, the figures are not necessarily drawn to scale.

### List of reference numerals:

1 - Vehicle, 2 - Battery, 3 - Controller, 4 - Motor, 5 - Battery cell, 6 - Battery module; 7 - Battery protective structure, 8 - Thermal management component, 9 - Case;
91 - First case part; 92 - Second case part; 93 - Accommodating space;
51 - Side wall, 51a - First side wall, 51b - Second side wall, 52 - Top wall;
71 - Base plate, 711 - Primary plate, 712 - Secondary plate, 72 - Force transferring member, 721 - First force transfer portion, 722 - Second force transferring portion, 723 - Reinforcing portion;
10 - Manufacturing apparatus, 11 - First provision device, 12 - Second provision device, 13 - Third provision device, 14 - Assembling device;
S₁ - First surface, S₂-Second surface;
R - Joint between force transferring member and second surface;
P₁ - First projection, P₂ - Second projection;
L - Distance of the center of first projection offset from the outer edge of second projection, L₁ - Distance between two adjacent force transferring members, L₂ - Dimension of battery cell in second direction;
*θ*₁-First included angle *θ*₁;
X - First direction, Y - Direction perpendicular to X in plane parallel to base plate, Z - Direction perpendicular to base plate.

### Detailed Description of Embodiments

In order to make the objectives, technical solutions and advantages of embodiments of the present application clearer, the technical solutions in the embodiments of the present application will be described clearly below with reference to the accompanying drawings in the embodiments of the present application. Obviously, the embodiments described are some of, rather than all of, the embodiments of the present application. All other embodiments obtained by those of ordinary skill in the art based on the embodiments of the present application without any creative effort shall fall within the scope of protection of the present application.

In order to make the objectives, technical solutions and advantages of embodiments of the present application clearer, the technical solutions in the embodiments of the present application will be described clearly and completely below with reference to the accompanying drawings in the embodiments of the present application. Apparently, the embodiments described are some of, rather than all of, the embodiments of the present application. Based on the embodiments of the present application, all other embodiments obtained by those of ordinary skill in the art without any creative effort fall within the scope of protection of the present application. It should be noted that, unless otherwise specified, the technical terms or scientific terms used in the embodiments of the present application shall have ordinary meanings understood by persons skilled in the art to which the embodiments of the present application belong.

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In addition, the technical terms "first", "second", etc. are merely for the purpose of description, and shall not be understood as any indication or implication of relative importance or any implicit indication of the number of technical features indicated, nor is it used to describe particular order or primary-secondary relationship. The term "and/or" in the present application is merely a description of the associated relationship of associated objects, representing that three relationships may exist, for example, A and/or B, may be expressed as: only A exists, both A and B exist, and only B exists. In addition, the character "/" herein generally indicates an "or" relationship between the associated objects.

"A plurality of" appearing in the present application means two or more (including two), and similarly, "a plurality of groups" means two or more groups (including two groups).

In the description of the embodiments of the present application, unless otherwise explicitly specified and defined, the technical terms such as "mount", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be communication between interiors of two elements or interaction between the two elements. For those of ordinary skill in the art, the specific meanings of the above terms in the embodiments of the present application can be understood according to specific situations.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art can understand that the embodiment described herein may be combined with another embodiment. Battery cells (also known as cells) mentioned in the art can be divided into disposable battery cells and rechargeable battery cells, depending on whether they are rechargeable or not. The primary batteries are commonly referred to as "disposable" batteries and primary cells, as they cannot be recharged and used after their charge has been exhausted and can only be discarded. The rechargeable battery cells are also referred to as secondary batteries, secondary cells, or storage batteries. The material and process for manufacturing the rechargeable battery cells are different from those for manufacturing the primary batteries. Advantages of the rechargeable battery cells are that the rechargeable battery cells can be used cyclically for a plurality of times after being charged, and have a larger output current load capacity than most primary battery cells. At present, common types of the rechargeable battery cells include: lead-acid battery cells, nickel-hydrogen battery cells, and lithium-ion battery cells. The lithium-ion battery cells have the advantages such as light weight, large capacity (the capacity is 1.5 to 2 times that of the nickel-hydrogen batteries of the same weight), and zero memory effect, and have a very low self-discharge rate. Therefore, despite its relatively high price, the lithium-ion battery cells have still been widely applied.

A battery mentioned in the embodiments of the present application refers to a single physical module including one or more battery cells to provide a high voltage and capacity. For example, the battery mentioned in the present application may include a battery module, a battery pack, etc. The battery cell may include a lithium-ion secondary battery cell, a lithium-ion primary battery cell, a lithium-sulfur battery cell, sodium-lithium-ion battery cell, a sodium-ion battery cell, a magnesium-ion battery cell, or the like. The battery cell may be flat, rectangular, or in another shape. The battery cell is generally available as a hard-shell cell or a pouch cell. The battery cell includes a positive electrode plate, a negative electrode plate, an electrolyte and a separator, and is a basic structural unit forming a battery module or a battery pack. Commonly used positive electrode materials for lithium-ion batteries include lithium cobalt oxide, lithium manganate oxide, lithium nickelate, lithium iron phosphate and ternary materials (e.g. lithium nickel cobalt manganate), etc. Commonly used negative electrode materials include carbon materials (e.g. graphite) and silicon-based materials, etc. Commonly used separator materials include polyolefin materials such as polyethylene (PE) or polypropylene (PP). The battery cells are generally classified into three types depending on the way of package: a cylindrical battery cell, a square battery cell, and a pouch battery cell.

The plurality of battery cells may be connected together in series and/or in parallel via electrode terminals, for use in various application scenarios. In some high-power application scenarios such as an electric vehicle, the use of the battery includes three levels: a battery cell, a battery module, and a battery pack. The battery module is formed by electrically connecting a specific quantity of battery cells and putting the battery cells into a frame to protect the battery cells from external impact, heat, vibration, etc. The battery pack is a final state of a battery system assembled in a vehicle. Most existing battery packs are manufactured by installing various control and protection systems such as a battery management system (BMS) and a thermal management component on one or more battery modules. With the development of technologies, the battery module may be omitted, that is, the battery pack is directly formed by battery cells. With this improvement, the number of parts is remarkably reduced while a weight energy density and a volume energy density of the battery system are improved. The battery mentioned in the present application includes a battery module or a battery pack.

In a new energy vehicle, the battery is typically installed underneath the vehicle. The bottom surface of the battery is large and not protected by the body structure, making it vulnerable to scrapes and impacts during driving, which is commonly referred to as "scraping the bottom" or "ball impact on the bottom". Due to the limited space inside a battery, the gap between a base plate of the battery and battery cells is small. The occurrence of a ball impact on the bottom can easily result in the deformation of the battery cells, leading to an internal short-circuit, fire or even explosion, endangering life and property. Therefore, how to protect the bottom of the battery is an urgent problem to be solved.

In view of this, the present application provides a battery protective structure. In the battery protective structure, a force transferring member is disposed on the side, facing away from the battery cells, of a base plate on which the battery cells are arranged, and the position of the force transferring member corresponds to at least part of side walls of the battery cell that are perpendicular to the base plate, so that an impact force of a ball impact on the bottom can be transferred to a corner between the side wall and a bottom wall of the battery cell through the force transferring member. As the side wall perpendicular to the base plate provides a great rigidity to the corner between the side wall and the bottom wall, the side wall is less prone to deformation after the impact force is transferred to the side wall through this corner, thus preventing the internal short-circuit of the battery caused by the ball impact on the bottom and improving safety of the battery.

The battery protective structure described in the embodiments of the present application is applicable to a battery and a power consuming apparatus using the battery.

The power consuming device may be a vehicle, a mobile phone, a portable device, a notebook computer, a ship, a spacecraft, an electric toy, an electric tool, etc. The vehicle may be a fuel vehicle, a gas vehicle or a new-energy vehicle. The new-energy vehicle may be a battery electric vehicle, a hybrid vehicle, an extended-range vehicle, etc. The spacecraft includes an airplane, a rocket, an aerospace plane, a spaceship, etc. The electric toy includes a stationary or mobile electric toy, such as a game machine, an electric toy car, an electric toy ship, and an electric toy airplane. The electric tool includes a metal cutting electric tool, a grinding electric tool, an assembling power tool, and a railway power tool, such as an electric drill, an electric grinder, an electric wrench, an electric screwdriver, an electric hammer, an electric impact drill, a concrete vibrator, and an electric planer. The foregoing power consuming devices are not specifically limited in the embodiments of the present application.

For ease of description, an example in which a power consuming device refers to a vehicle is used for description in the following embodiments.

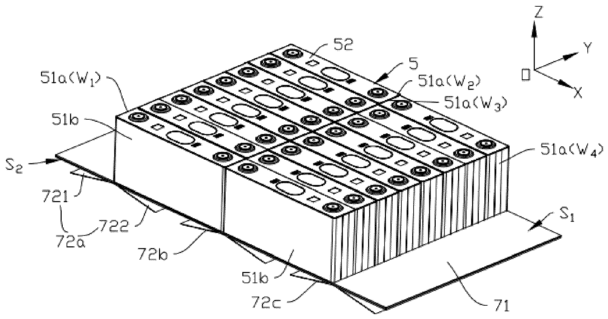

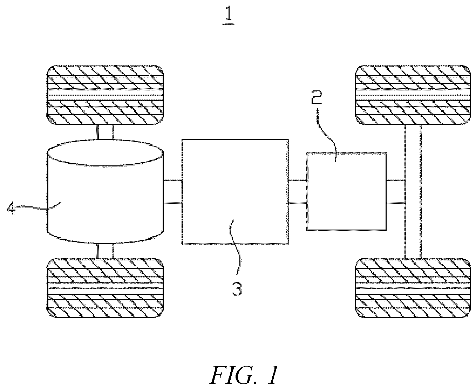

Reference is made to FIG. 1. FIG. 1 is a schematic structural diagram of a vehicle according to some embodiments of the present application. As shown in FIG. 1, a battery 2 is arranged inside the vehicle 1, the battery 2 refers to a single physical module that includes one or more battery cells 5 to provide higher voltage and capacity. For example, the battery 2 mentioned in the present application may include a battery module 6 or a battery pack. The battery 2 may be disposed at the bottom, head, or tail of the vehicle 1. The battery 2 may be configured to supply power to the vehicle 1. For example, the battery 2 may be used as an operating power supply of the vehicle 1. The vehicle 1 may further include a controller 3 and a motor 4. The controller 3 is configured to control the battery 2 to supply power to the motor 4, for example, to meet working power requirements during starting, navigation and traveling of the vehicle 1.

In some embodiments of the present application, the battery 2 can not only serve as a power supply for operating the vehicle 1, but can also serve as a power supply for driving the vehicle 1, in place of or partially in place of fuel or natural gas, to provide driving power for the vehicle 1.

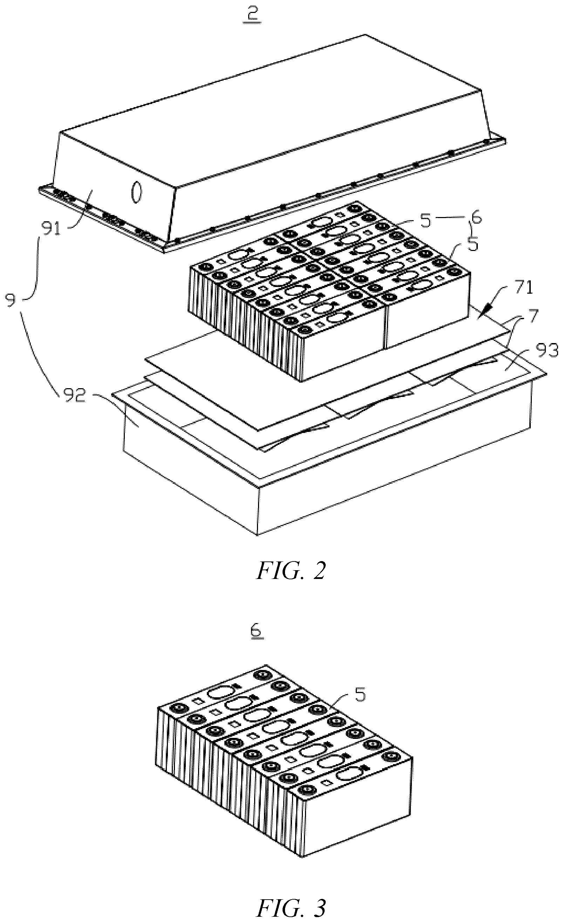

FIG. 2 is a schematic exploded view of a battery according to some embodiments of the present application. As shown in FIG. 2, the battery 2 includes a plurality of battery cells 5 and a battery protective structure 7.

In some embodiments, the plurality of battery cells in the battery 2 form a battery module 6, the battery 2 further includes a case 9, and the battery module 6 is accommodated in the case 9.

The case 9 is configured to accommodate the battery cell 6, and the case 9 may be of various structures. In some embodiments, the case 9 may include a first case part 91 and a second case part 92, the first case part 91 and the second case part 92 cover each other, and the first case part 91 and the second case part 92 jointly define an accommodating space 93 for accommodating the battery module 6. The second case part 92 may be of a hollow structure with one end opened, the first case part 91 is of a plate-like structure, and the first case part 91 covers the open side of the second case part 92 to form the case 9 having the accommodating space 93. The first case part 91 and the second case part 92 each may also be of a hollow structure with one side opened, and the open side of the first case part 91 covers the open side of the second case part 92 to form the case 9 having the accommodating space 93. Of course, the first case part 91 and the second case part 92 may have various shapes such as a cylinder and a cuboid.

To improve the sealing performance after the first case part 91 and the second case part 92 are connected to each other, a seal, such as a sealant and a seal ring, may be also provided between the first case part 91 and the second case part 92.

Assuming that the first case part 91 covers the top of the second case part 92, the first case part 91 may also be referred to as an upper case cover, and the second case part 92 may also be referred to as a lower case body.

In the battery 2, a plurality of battery cells 5 are provided. The plurality of battery cells 5 may be connected in series, parallel, or series-parallel, where being connected in series-parallel means a combination of series and parallel connections of the plurality of battery cells 5. The plurality of battery cells 5 may be directly connected together in series, or in parallel, or in series and parallel, and then a whole body composed of the plurality of battery cells 5 is accommodated in the case 9. Of course, a plurality of battery cells 5 may also be first in series connection or parallel connection or series-parallel connection to form a battery module 6, and a plurality of battery modules 6 are in series connection or parallel connection or series-parallel connection to form a unit and are accommodated in the case 9.

FIG. 3 is a schematic structural diagram of the battery module in FIG. 2. As shown in FIG. 3, in some embodiments, a plurality of battery cells 5 are provided, and the plurality of battery cells 5 are connected in series or in parallel or in series-parallel to form a battery module 6. A plurality of battery modules 6 are connected in series or in parallel or in series-parallel to form a unit and are accommodated in the case.

The battery protective structure 7 according to some embodiments of the present application is described in detail below.

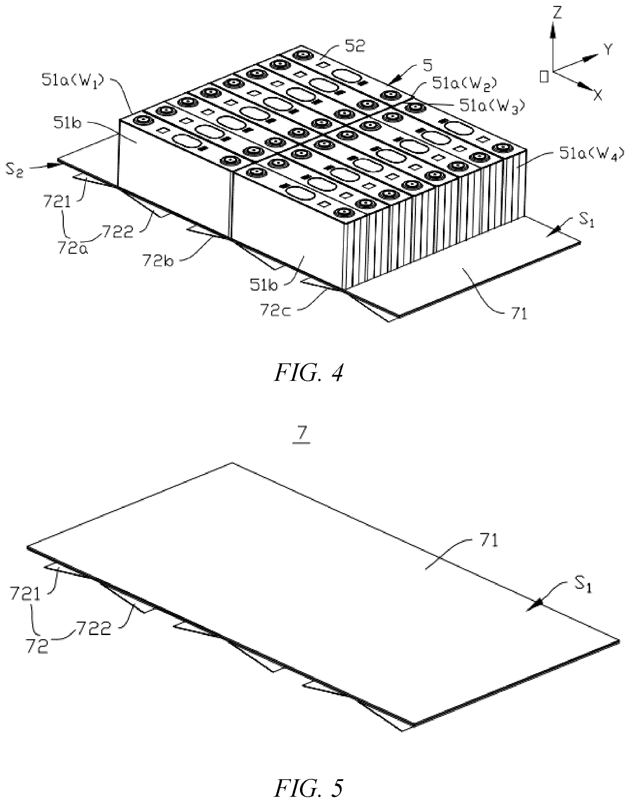

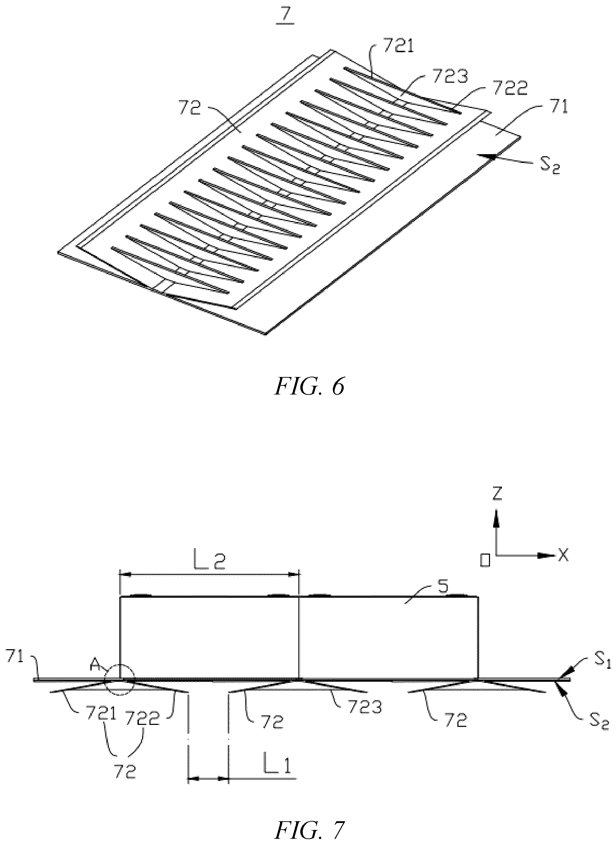

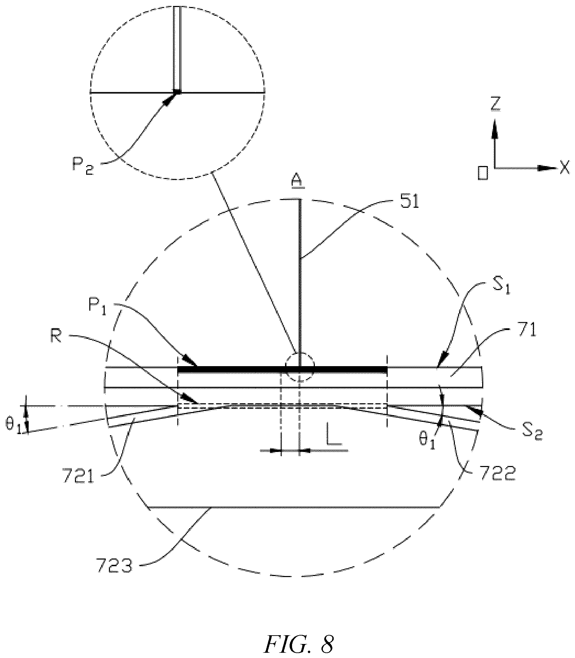

FIG. 4 is a schematic diagram of a combination of a battery protective structure and battery cells according to some embodiments of the present application; FIG. 5 is a schematic structural diagram of a battery protective structure according to some embodiments of the present application; FIG. 6 is a schematic structural diagram of a battery protective structure according to some embodiments of the present application in another view; FIG. 7 is a schematic front view of a combination of a battery protective structure and battery cells according to some embodiments of the present application; and FIG. 8 is an enlarged view of part A in FIG. 7.

Referring to FIGs. 4 to 6, embodiments of the present application provide a battery protective structure 7, the battery protective structure 7 including a base plate 71 and a force transferring member 72. The base plate 71 includes a first surface S₁ and a second surface S₂. The first surface S₁ is used for the arrangement of a plurality of battery cells 5, the battery cells 5 each include a plurality of side walls 51, and the plurality of side walls 51 are configured to be perpendicular to the base plate 71. The force transferring member 72 is disposed on the base plate 71, one end of the force transferring member 72 being joined to the second surface S₂ and the other end of the force transferring member 72 extending in a direction away from the second surface S₂. The joint (the region R as shown in FIG. 8) between the force transferring member 72 and the second surface S₂ is configured to correspond to at least part of the side walls 51 in an arrangement direction of the first surface S₁ and the second surface S₂.

The direction X in the figure is a first direction, the direction Y is a direction perpendicular to X in a plane parallel to the base plate 71, and the direction Z is a direction perpendicular to the base plate 71.

In the specific embodiment shown in the figure, the base plate 71 is a plate-like structure, and the first surface S₁ and the second surface S₂ are the larger surfaces in the plate-like structure, both disposed parallel to a plane XOY. The first surface S₁ and the second surface S₂ are arranged in the direction Z.

The battery cell 5 includes a top wall 52, a bottom wall (not shown in the figure) and a plurality of side walls 51. Both the top wall 52 and the bottom wall are parallel to the base plate 71 (i.e. parallel to the plane XOY). The side walls 51 are perpendicular to the base plate 71 (i.e. perpendicular to the plane XOY). Among the walls of the battery cell 5, the side wall 51 perpendicular to the base plate 71 functions as a reinforcing rib structure between the bottom wall and the top wall 52 of the battery cell 5, and thus the side wall 51 has a large rigidity and is not easy to be deformed by the impact force.

In the specific embodiment shown in the figures, the battery cell 5 is in contact with the first surface S₁ of the base plate 71, and the battery cell 5 can be fixed to the first surface S₁ by gluing (using a binder or gum) or by welding. It should be understood by those skilled in the art that the figures show only examples, and the battery cell 5 in other embodiments may not be in contact with the first surface S₁, for example, when the thermal management component or another component is further disposed between the battery cell 5 and the base plate 71, the battery cell 5 is not in direct contact with the first surface S₁.

One end of the force transferring member 72 is connected to the second surface S₂ of the base plate 71 by gluing (using a binder or gum) or by welding. The "direction away from the second surface S₂" is a direction with an included angle to the plane XOY and in the negative direction of the Z-axis.

The welding method described above may be hot plate welding or laser welding. The battery cell 5 and the base plate 71 as well as the base plate 71 and the force transferring member 72 are fixed by gluing or welding, without bolts or other fasteners, thereby saving cost and improving the efficiency.

Referring to FIGs. 7 and 8, a joint between the force transferring member 72 and the second surface S₂ is in a region R. The joint R between the force transferring member 72 and the second surface S₂ is configured to correspond to at least part of the side walls 51, where "correspond" means that the projection of the region R in the Z-axis direction coincides or substantially coincides with the projection of the side wall 51 in the Z-axis direction.

The side wall 51 includes a pair of second side walls 51b with a larger area and a pair of first side walls 51a with a smaller area. The term "at least part of the side walls 51" refers to one or more of the side walls 51, such as a single side wall, two adjacent side walls, two opposite side walls or all side walls. Accordingly, the force transferring member 72 has a corresponding relationship with the side walls 51. For example, the force transferring member 72 corresponds to one single side wall of the battery cell 5, the force transferring member 72 corresponds to two adjacent side walls of the battery cell 5, the force transferring member 72 corresponds to two opposite side walls of the battery cell 5, or the force transferring member 72 corresponds to all side walls of the battery cell 5, and so on.

According to the embodiments of the present application, the force transferring member 72 is disposed on the side, facing away from the battery cells 5, of the base plate 71 on which the battery cells 5 are arranged, and the position of the force transferring member 72 corresponds to at least part of side walls 51 of the battery cell 5 that are perpendicular to the base plate 71, so that an impact force of a ball impact on the bottom can be transferred to a corner between the side wall 51 and a bottom wall of the battery cell 5 through the force transferring member 72. As the side wall 51 perpendicular to the base plate 71 provides a great rigidity to the corner between the side wall 51 and the bottom wall, the side wall 51 is less prone to deformation after the impact force is transferred to the side wall 51 through this corner, thus preventing the internal short-circuit of the battery caused by the ball impact on the bottom and improving safety of the battery.

Further reference is made to FIG. 2 for the arrangement of the battery protective structure 7 in the case 9 of the battery 2. The battery protective structure 7 can be fixed directly to the bottom of the second case part 92, or a bottom guard (not shown in the figure) can be disposed at the bottom of the second case part 92, and the battery protective structure 7 is fixed onto the bottom guard.

Referring to FIG. 8, in some embodiments, a first projection P₁, of the joint R between the force transferring member 72 and the second surface S₂, on the first surface S₁ covers a second projection P₂, of the at least part of side walls 51, on the first surface S₁.

Both the first projection P₁ and the second projection P₂ are orthographic projections along the Z-axis. That the first projection P₁ "covers" the second projection P₂ means that the second projection P₂ is located within the first projection P₁ or overlaps with the first projection P₁.

Since the first projection P₁, of the joint R between the force transferring member 72 and the second surface S₂, on the first surface S₁ covers the second projection P₂, of the at least part of side walls 51, on the first surface S₁, the impact force transferred to the joint between the force transferring member 72 and the second surface S₂ can be transferred to the side wall 51 corresponding to the force transferring member 72, thus avoiding the circumstance that the impact force directly impacts the bottom wall of the battery cell 5 parallel to the base plate to deform the bottom wall to lead to an internal short-circuit of the battery.

With continued reference to FIGs. 4 and 7, in some embodiments, the joint R between the force transferring member 72 and the second surface S₂ is configured to correspond to the first side wall 51a with a smaller area of the plurality of side walls 51.

As previously described, the side wall 51 includes the second side walls 51b with a larger area and the first side walls 51a with a smaller area. Since the joint R between the force transferring member 72 and the second surface S₂ is configured to correspond to the first side wall 51a with a smaller area of the plurality of the side walls 51, the impact force of the ball impact on the bottom on the bottom area of the battery is transferred to the first side wall 51a with a smaller area, the first side wall 51a with a smaller area is less prone to deformation when subjected to a force than the side wall with a larger area, thus improving safety of the battery.

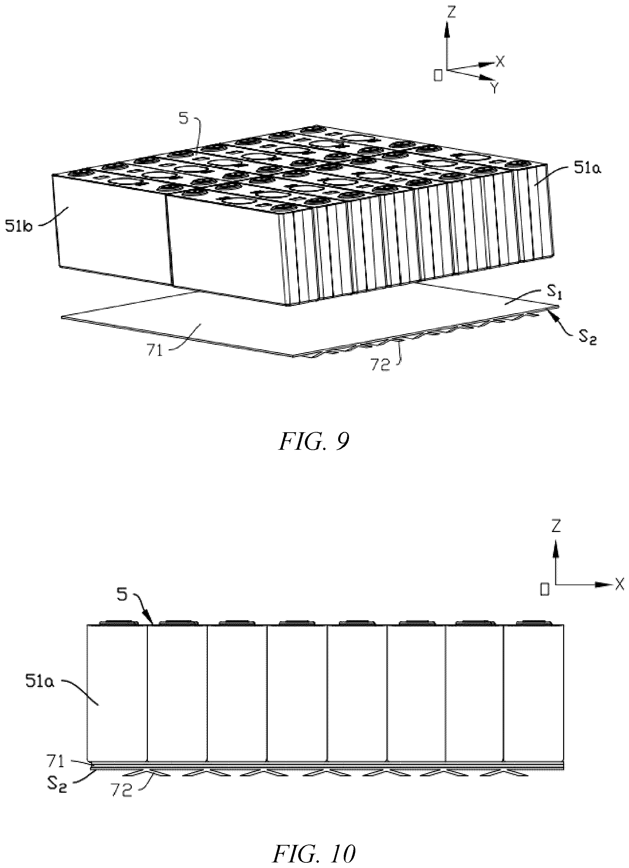

Furthermore, since the joint R between the force transferring member 72 and the second surface S₂ is configured to correspond to the first side wall 51a with a smaller area of the plurality of the side walls 51, a small number of force transferring members 72 can be provided, making the structure simple and cost saving. FIG. 9 is a schematic diagram of a combination of a battery protective structure and battery cells according to some embodiments of the present application. FIG. 10 is a schematic front view of a combination of a battery protective structure and battery cells according to some embodiments of the present application. As shown in FIGs. 9 and 10, since the joint R between the force transferring member 72 and the second surface S₂ is configured to correspond to the second side wall 5 1b with a larger area of the plurality of side walls, a large number of force transferring members 72 are required to ensure a better transferring effect of the impact force. For example, for sixteen battery cells arranged in eight rows and two columns, if the joint R between the force transferring member 72 and the second surface S₂ is configured in each row or column corresponding to the first side wall 51a as shown in FIG. 9 to correspond to the second side wall 51b with a larger area of the plurality of side walls 51, nine force transferring members 72 are required. If the joint R between the force transferring member 72 and the second surface S₂ is configured as shown in FIG. 4 to correspond to the first side wall 51a with a smaller area of the plurality of side walls 51, only three force transferring members are required, thus reducing the number of force transferring members 72 in the embodiment shown in FIG. 4. With continued reference FIG. 8, in some embodiments, in a first direction X, the center of the first projection P₁, of the joint R between the force transferring member 72 and the second surface S₂, on the first surface S₁ is offset from the outer edge of the second projection P₂, of the at least part of side walls 51, on the first surface S₁ by a distance L, where 0 ≤ L ≤ 10 mm, and the first direction is parallel to the first surface S₁.

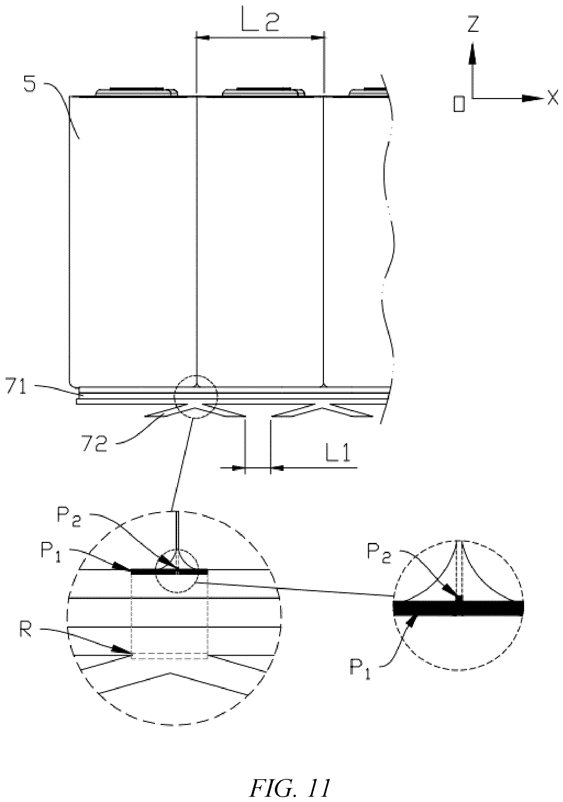

FIG. 8 shows an embodiment where the joint between the force transferring member and the second surface is disposed corresponding to the first side wall with a smaller area of the plurality of the side walls. For an embodiment where the joint between the force transferring member and the second surface is disposed corresponding to the first side wall with a larger area of the plurality of the side walls, for example, the embodiment shown in FIGs. 9 and 10, reference is made to FIG. 11. Similarly to that shown in FIG. 8, in FIG. 11, in a first direction X, the center of the first projection P₁, of the joint R between the force transferring member 72 and the second surface S₂, on the first surface S₁ is offset from the outer edge of the second projection P₂, of the at least part of side walls 51, on the first surface S₁ by a distance L, where 0 ≤ L ≤ 10 mm, and the first direction is parallel to the first surface S₁.

For the side wall 51 in the case of 0 ≤ L ≤ 10 mm, it is possible to ensure that there is no offset or a small offset L between the center of the first projection P₁ and the outer edge of the second projection P₂, so that a force transferring position between the force transferring member 72 and the side wall 51 can be located in the center of the force transferring member 72 in the first direction X or closer to the center, thereby improving the rigidity of the force transferring member 72, making the force transferring member 72 less prone to deformation and ensuring the force transferring effect.

In some embodiments, a plurality of force transferring members 72 are disposed in a first direction X, a distance L₁ between two adjacent force transferring members 72 is less than or equal to 1/3 of a dimension L₂ of the battery cell 5 in the first direction X.

Referring to FIG. 7, in the embodiment shown in the figure, the dimension L₂ of the battery cell 5 in the first direction X is a length of the battery cell 5. The distance L₁ between two adjacent force transferring members 72 is less than or equal to 1/3 of the length of the battery cell 5.

Referring to FIG. 11, in the embodiment shown in the figure, the dimension L₂ of the battery cell 5 in the first direction X is a width of the battery cell 5. The distance L₁ between two adjacent force transferring members 72 is less than or equal to 1/3 of the width of the battery cell 5.

Since the distance L₁ between two adjacent force transferring members 72 is less than or equal to 1/3 of the dimension L₂ of the battery cell 5 in the first direction X, the area of the region covered by the lower end of the force transferring member 72 is greater than or equal to 2/3 of the area of the bottom wall of the battery cell 5, so that the force transferring member 72 can transfer most of the impact force of the ball impact on the bottom that is exerted on the bottom region of the battery.

Referring further to FIG. 8, in some embodiments, a first included angle θ₁, is formed between the force transferring member 72 and the base plate 71, the first included angle θ₁ satisfying 30° ≤ θ₁ ≤ 60°.

If the first angle θ₁ is larger, the force transferring member 72 covers a smaller area of the bottom of the battery, some of the impact force cannot be transferred through the force transferring member 72 to the side wall 51, resulting in the deformation of the battery cell 5. If the first angle θ₁ is smaller, the impact force on the central area of the bottom of the battery covered by the force transferring member 72 cannot be transferred to the side wall 51 via the force transferring member 72, resulting in the deformation of the battery cell 5. Therefore, by setting the first included angle θ₁ in the range of 30°~60°, most or all of the impact force can be transferred to the side wall 51 via the force transferring member 72, thus improving the effectiveness of transferring the impact force.

Referring to FIGs. 4 and 7, in some embodiments, the force transferring member 72 has an inverted V-shaped structure.

The lower end (the end connected to the second surface S₂) of the inverted V-shaped structure is larger in size than the upper end. Due to the large size of the lower end (the other end extending in a direction away from the second surface S₂), a larger region of the bottom of the battery can be covered, and thus the impact force applied on the bottom of the battery is transferred as much as possible to the side wall 51. The upper end of the inverted V-shaped structure has a small size, which allows the impact force to be concentrated and transferred to the corresponding side wall 51.

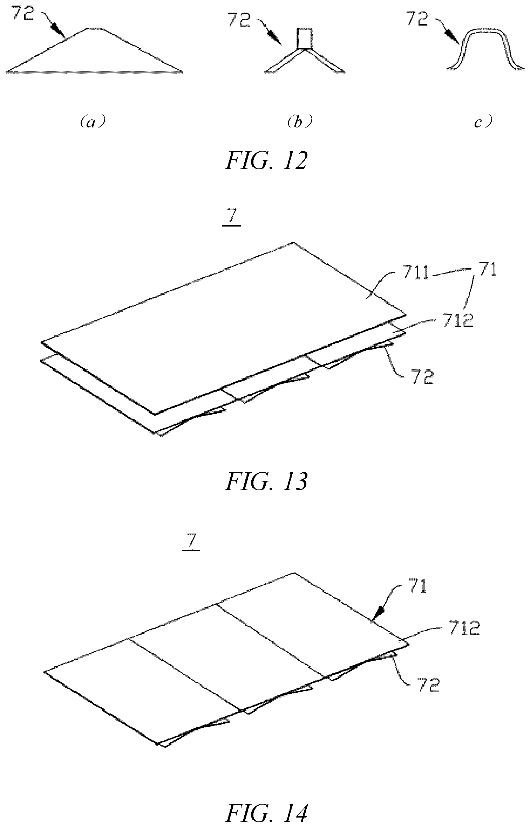

The force transferring member 72 shown in FIGs. 4 and 7 has an inverted V-shaped structure. FIG. 12 is a schematic cross-sectional view of a force transferring member according to some embodiments of the present application. It should be understood by those skilled in the art that in other embodiments, the force transferring member 72 may also be of other structures, such as a prism with a trapezoidal cross-section shown in FIG. 12 (a), or a combination of an inverted V-shape and a plate-like structure shown in FIG. 12 (b), or a wavy structure shown in FIG. 12 (c), or of other structures. In some embodiments shown in FIG. 12, due to the large size of the lower end of the force transferring member 72, a larger region of the bottom of the battery can be covered, and thus the impact force applied on the bottom of the battery is transferred as much as possible to the side wall 51. Since the upper end of the force transferring member 72 has a small size, the impact force can be concentrated and transferred to the corresponding side wall 51.

With continued reference to FIGs. 6 and 8, the force transferring member 72 includes a first force transferring portion 721 and a second force transferring portion 722 separately connected to the second surface S₂, and a projection (i.e., the first projection P₁) of junction between the first force transferring portion 721, the second force transferring portion 722 and the second surface S₂ covers the second projection P₂, of the at least part of side walls 51, on the first surface S₁.

The impact force is transferred to the base plate 71 by means of the first force transferring portion 721 and the second force transferring portion 722, respectively. Since the projection P₁ of the junction of the first force transferring portion 721, the second force transferring portion 722 and the second surface S₂ covers the second projection P₂, of the at least part of side walls 51, on the first surface S₁, the impact force transferred to the junction between the first force transferring portion 721, the second force transferring portion 722 and the second surface S₂ on the base plate 71 can be transferred to the side wall 51 corresponding to the force transferring member 72, thus avoiding the circumstance that the impact force directly impacts the bottom wall of the battery cell 5 parallel to the base plate 71 to deform the bottom wall to lead to an internal short-circuit of the battery.

With continued reference to FIG. 6, in some embodiments, the force transferring member 72 further includes a reinforcing portion 723, the reinforcing portion 723 being disposed between the first force transferring portion 721 and the second force transferring portion 722 and connected to the first force transferring portion 721 and the second force transferring portion 722.

Since the reinforcing portion 723 is disposed between the first force transferring portion 721 and the second force transferring portion 722, the rigidity of the force transferring member 72 can be increased to enable the force transferring member 72 to be less prone to deformation, for example, to prevent the force transferring member 72 from being flattened under a high impact force, thereby ensuring the force transferring effect.

As shown in FIG. 6, the reinforcing portion 723 is a plate-like structure, there is no gap between the reinforcing portion and the first force transferring member 721 and the second force transferring portion 722, achieving a better reinforcing effect. It should be understood by those skilled in the art that in other embodiments, the reinforcing portion 723 may also be other structures, such as a block-like structure or a rib-like structures, as long as the rigidity of the force transferring member 72 can be improved.

FIG. 13 is a schematic exploded view of a battery protective structure according to some embodiments of the present application. Referring to FIG. 13, the base plate 71 includes a primary plate 711 and a plurality of secondary plates 712. The force transferring members 72 are mounted on the secondary plates 712. The plurality of secondary plates 712 with the force transferring members 72 mounted thereon are mounted on the primary plate 711, so that the battery protective structure 7 is formed. In this method, one single force transferring member 72 is mounted first on the smaller sized secondary plate 712 to facilitate the mounting, and then the secondary plate 712 with the force transferring member 72 mounted thereon is fixed to the primary plate 711, so that the stability of the battery protective structure 7 is improved.

FIG. 14 is a schematic exploded view of a battery protective structure according to some embodiments of the present application. Referring to FIG. 14, the base plate 71 includes a plurality of secondary plates 712, force transferring members 72 are mounted on the secondary plates 712, and the plurality of secondary plates 712 with the force transferring members 72 mounted thereon are then assembled in one piece to form the battery protective structure 7. This approach saves material and cost and simplifies mounting processes and improves the mounting efficiency as compared with that in the embodiment shown in FIG. 13, where no primary plate 711 is provided.

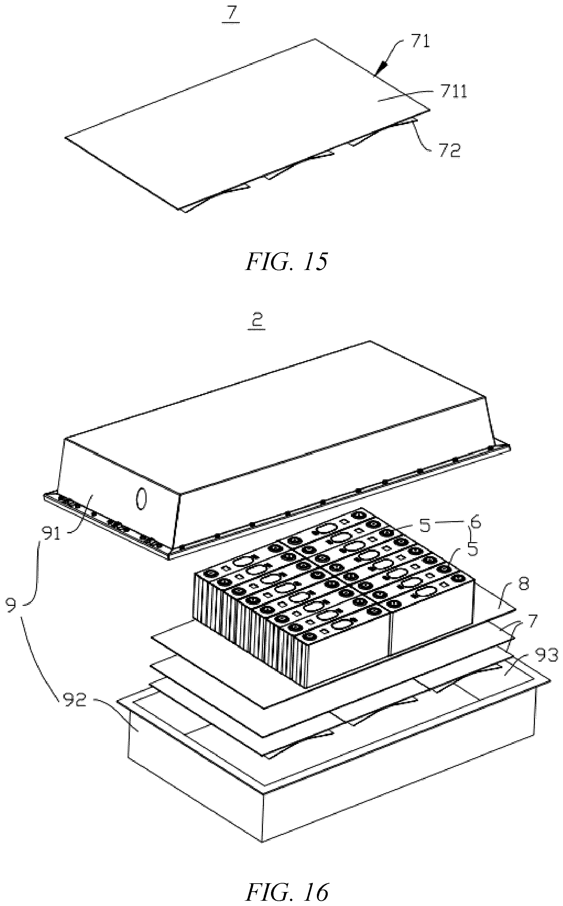

FIG. 15 is a schematic exploded view of a battery protective structure according to some embodiments of the present application. Referring to FIG. 15, the base plate 71 includes a primary plate 711, force transferring members 72 are mounted directly on the primary plate 711, so that the battery protective structure 7 is formed. This approach saves material and cost and simplifies mounting processes and improves the mounting efficiency as compared with that in the embodiment shown in FIG. 13, where no secondary plates 712 are provided. This approach saves the process of assembling the secondary plates 712 into one piece and also improves the mounting efficiency as compared with that in the embodiment shown in FIG. 14, where the force transferring members 72 are mounted directly on the large-sized primary plate 711.

The primary plate 711 may be an upper plate in the battery or a plate provided separately.

The number of force transferring members 72 can be set according to the arrangement of the battery cells 5 and in conjunction with the correspondence relationship between the force transferring members 72 and the side walls 51. As shown in FIG. 4, there are two rows of battery cells 5 arranged along the Y-axis, which are a first group of battery cells and a second group of battery cells, respectively. The force transferring member 72 corresponds to a pair of side walls of the battery cell 5 that are parallel to a plane YOZ. The pair of side walls of the battery cell 5 in the first group of battery cells parallel to the plane YOZ includes a side wall W₁ and a side wall W₂, and the pair of side walls of the battery cell 5 in the second group of battery cells parallel to the plane YOZ includes a side wall W₃ and a side wall W₄. A total of three force transferring members 72 are provided as below: a first force transferring member 72a, a second force transferring portion 72b, and a third force transferring member 72c. The first force transferring member 72a corresponds to the side wall W₁ of the first group of battery cells, the second force transferring portion 72b corresponds to the side wall W₂ of the first group of battery cells and the side wall W₃ of the second group of battery cells, and the third force transferring member 72c corresponds to the side wall W₄ of the second group of battery cells.

Of course, multiple groups of battery cells can be provided, and accordingly, the number of force transferring members 72 can be set corresponding to the number of groups of battery cells.

Since the force transferring members 72 are provided corresponding to a pair of side walls of the battery cell 5 parallel to the plane YOZ, the force transferring members 72 can transfer the impact force of the ball impact on the bottom that is exerted substantially on the entire bottom region of the battery and to transfer the impact force to each side wall of the battery cell 5 parallel to the plane YOZ in a generally uniform manner, so that each side wall parallel to the plane YOZ is subjected to a uniform force, avoiding the circumstance that the impact force is concentrated and transferred to one of the side walls to deform the side wall to lead to an internal short-circuit of the battery.

It is to be understood that in some embodiments, the battery protective structure 7 may be provided with only one or a combination of the first force transferring member 72, the second force transferring portion 72 and the third force transferring member 72. For example, the force transferring members 72 are disposed near the positions susceptible to the impact force of the ball impact on the bottom, so that the number of force transferring members 72 can be appropriately reduced and the cost can be reduced. In order to ensure the structural stability and to ensure an even transferring effect of the impact force, the force transferring members 72 can be disposed as symmetrically as possible.

As shown in FIGs. 9 and 10, there are eight rows of battery cells 5 arranged in the first direction X. The force transferring members 72 correspond to a pair of side walls of the battery cell 5 parallel to the XOZ plane. A total of seven force transferring members 72 are provided. Two of the force transferring members 72 located on the outer side correspond to the outer side walls of the two groups of battery cells located on the outer side, and the second force transferring portion 72 located in the middle corresponds to the adjacent side walls of the two adjacent groups of battery cells.

Since the force transferring members 72 are provided corresponding to a pair of side walls of the battery cell 5 parallel to the plane XOZ, the force transferring members 72 can transfer the impact force of the ball impact on the bottom that is exerted substantially on the entire bottom region of the battery and to transfer the impact force to each side wall of the battery cell 5 parallel to the plane XOZ in a generally uniform manner, so that each side wall parallel to the plane XOZ is subjected to a uniform force, avoiding the circumstance that the impact force is concentrated and transferred to one of the side walls to deform the side wall to lead to an internal short-circuit of the battery.

It is to be understood that in some embodiments, the battery protective structure 7 may also be provided with only one or a combination of the seven force transferring members 72. For example, the force transferring members 72 are disposed near the positions susceptible to the impact force of the ball impact on the bottom, so that the number of force transferring members 72 can be appropriately reduced and the cost can be reduced. In order to ensure the structural stability and to ensure an even transferring effect of the impact force, the force transferring members 72 can be disposed as symmetrically as possible.

In some embodiments, a material of the battery protective structure 7 includes a resin-based composite.

The resin-based composite contains matrix resin and a reinforcing material. The matrix resin of the resin-based composite may be polypropylene (PP), polyamide 6 (PA6), polyamide 66 (PA66), polyphenylene sulfide (PPS), etc., and the reinforcing material may be glass fiber, carbon fiber, etc.

By using a resin-based composite as the material for the battery protective structure 7, the rigidity of the battery protective structure 7 can be improved, the force transferring member 72 is less prone to deformation, and thus the force transferring effect is guaranteed.

In some embodiments, the battery protective structure 7 has a thermal conductivity less than or equal to 0.5 W/(m·K).

The battery protective structure 7 may be made of a non-metallic material having a thermal conductivity less than or equal to 0.5 W/(m K). Since the battery protective structure 7 has a thermal conductivity less than or equal to 0.5 W/(m K), the battery protective structure 7 has some thermal insulation properties, and in the case that a thermal management component is disposed between the battery cell 5 and the battery protective structure 7, the thermal management efficiency, for example, the cooling efficiency, of the thermal management component can be ensured.

FIG. 16 is a schematic exploded view of a battery according to some embodiments of the present application. Different from the embodiment shown in FIG. 2, the battery 2 in FIG. 16 further includes a thermal management component 8, the thermal management component 8 being disposed between the battery protective structure 7 and the plurality of battery cells 5. The thermal management component 8 can be fixed to the battery cells 5 and the battery protective structure 7 by gluing (using a binder or gum) or welding, respectively. The welding method may be hot plate welding or laser welding.

Since the thermal management component 8 is disposed between the battery protective structure 7 and the plurality of battery cells 5, the battery cells 5 can be thermally managed, for example, the battery cells 5 can be cooled.

The thermal management component 8 may be a liquid cooling device (e.g. a water cooling plate), cooling fins, etc.

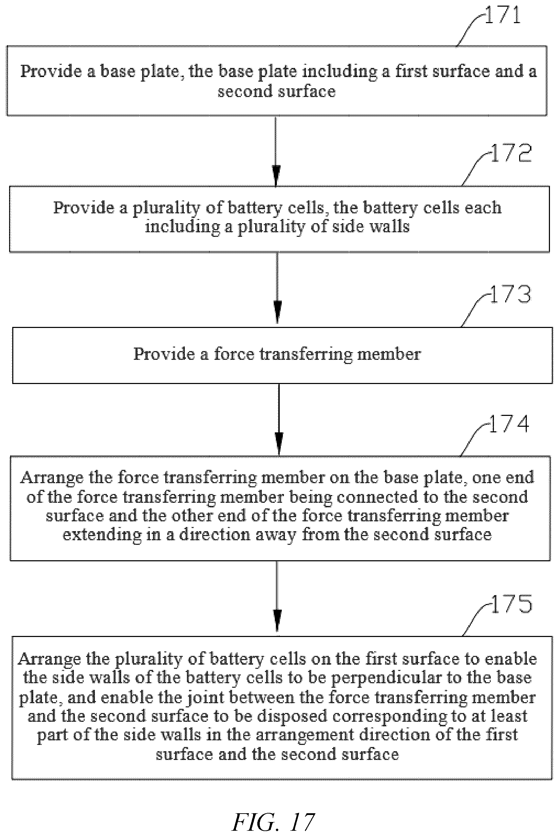

With reference to FIG. 17, FIG. 17 is a schematic flowchart of a method for manufacturing a battery according to some embodiments of the present application, and the method for manufacturing a battery includes the following content.

Step 171: Provide a base plate, the base plate including a first surface and a second surface.

Step 172: Provide a plurality of battery cells, the battery cells each including a plurality of side walls.

Step 173: Provide a force transferring member.

Step 174: Arrange the force transferring member on the base plate, one end of the force transferring member being joined to the second surface and the other end of the force transferring member extending in a direction away from the second surface.

Step 175: Arrange the plurality of battery cells on the first surface to enable the side walls of the battery cells to be perpendicular to the base plate, and enable a joint between the force transferring member and the second surface to correspond to at least part of the side walls in anarrangement direction of the first surface and the second surface.

The relevant structure of the battery manufactured by the method for manufacturing a battery of this embodiment can be referred to the relevant content of the battery described in the corresponding embodiments of the FIGs. 1 to 16 described above. Details are not described herein again.

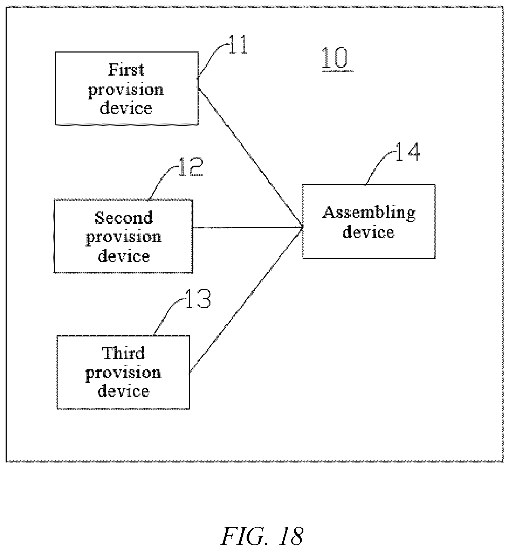

With reference to FIG. 18, FIG. 18 is a schematic structural diagram of an apparatus for manufacturing a battery according to some embodiments of the present application, and the apparatus 10 for manufacturing a battery includes: a first provision device 11, a second provision device 12, a third provision device 13, and an assembling device 14.

The first provision device 11 is configured to provide a base plate, the base plate including a first surface and a second surface.

The second provision device 12 is configured to provide a plurality of battery cells, the battery cells each including a plurality of side walls.

The third provision device 13 is configured to provide a force transferring member.

The assembling device 14 is configured to arrange the force transferring member on the base plate, one end of the force transferring member being joined to the second surface and the other end of the force transferring member extending in a direction away from the second surface.

The assembling device 14 is further configured to arrange the plurality of battery cells on the first surface to enable the first side walls of the battery cells to be perpendicular to the base plate, and enable the joint between the force transferring member and the second surface to correspond to at least part of the first side walls in the arrangement direction of the first surface and the second surface.

The relevant structure of the battery cell manufactured by the apparatus for manufacturing a battery of this embodiment can be referred to the relevant content of the battery described in the corresponding embodiments of the FIGs. 1 to 16 described above. Details are not described herein again.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery protective structure, comprising:
a base plate (71), the base plate (71) comprising a first surface (S₁) and a second surface (S₂), wherein the first surface (S₁) is used for the arrangement of a plurality of battery cells (5), the battery cells (5) each comprise a plurality of side walls (51), and the plurality of side walls are configured to be perpendicular to the base plate (71); and
a force transferring member (72), disposed on the base plate (71), one end of the force transferring member (72) being joined to the second surface (S₂) and the other end of the force transferring member (72) extending in a direction away from the second surface (S₂); wherein
a joint between the force transferring member (72) and the second surface (S₂) is configured to correspond to at least part of the side walls in an arrangement direction of the first surface (S₁) and the second surface (S₂).

2. The battery protective structure according to claim 1, wherein
a first projection (P₁), of the joint between the force transferring member (72) and the second surface (S₂), on the first surface (S₁) covers a second projection (P₂), of the at least part of side walls, on the first surface (S₁).

3. The battery protective structure according to claim 1 or 2, wherein
in a first direction (X), the center of the first projection (P₁), of the joint between the force transferring member (72) and the second surface (S₂), on the first surface (S₁) is offset from an outer edge of the second projection (P₂), of the at least part of side walls, on the first surface (S₁) by a distance L, where 0 ≤ L ≤ 10 mm, and the first direction (X) is parallel to the first surface (S₁).

4. The battery protective structure according to any one of claims 1-3, wherein a first included angle *θ*₁, is formed between the force transferring member (72) and the base plate (71), the first included angle *θ*₁ satisfying: 30° ≤ *θ*₁ ≤ 60°.

5. The battery protective structure according to claim 4, wherein the force transferring member (72) has an inverted V-shaped structure.

6. The battery protective structure according to claim 5, wherein the force transferring member (72) comprises a first force transferring portion (721) and a second force transferring portion (722) separately connected to the second surface (S₂), and a projection of a junction between the first force transferring portion (721) and second force transferring portion (722) and the second surface (S₂) covers the second projection (P₂), of the at least part of side walls, on the first surface (S₁).

7. The battery protective structure according to claim 6, wherein the force transferring member (72) further comprises a reinforcing portion (723), the reinforcing portion (723) being disposed between the first force transferring portion (721) and the second force transferring portion (722) and connected to the first force transferring portion (721) and the second force transferring portion (722).

8. The battery protective structure according to any one of claims 1-7, wherein a plurality of force transferring members (72) are disposed in a first direction (X), a distance (L₁) between two adjacent force transferring members (72) is less than or equal to 1/3 of a dimension (L₂) of the battery cell (5) in the first direction (X), and the first direction (X) is parallel to the first surface (S₁).

9. The battery protective structure according to any one of claims 1-8, wherein the joint between the force transferring member (72) and the second surface (S₂) is configured to correspond to a first side wall (51a) with the smaller area of the plurality of the side walls.

10. The battery protective structure according to any one of claims 1-9, wherein a material of the battery protective structure (7) comprises a resin-based composite.

11. The battery protective structure according to any one of claims 1-10, wherein the battery protective structure (7) has a thermal conductivity less than or equal to 0.5 W/(m K).

12. A battery, comprising:
a plurality of battery cells (5); and
a battery protective structure (7) according to any one of claims 1-11, the battery cells (5) being disposed on the first surface (S₁).

13. The battery according to claim 12, wherein the battery (2) further comprises a thermal management component (8), the thermal management component (8) being disposed between the battery protective structure (7) and the plurality of battery cells (5).

14. A power consuming device, comprising a battery (2) according to claim 12 or 13, the battery (2) being configured to provide electrical energy.

15. A method for manufacturing a battery, the method comprising:
providing a base plate, the base plate comprising a first surface and a second surface;
providing a plurality of battery cells, the battery cells each comprising a plurality of side walls;
providing a force transferring member;
arranging the force transferring member on the base plate, one end of the force transferring member being joined to the second surface and the other end of the force transferring member extending in a direction away from the second surface; and
arranging the plurality of battery cells on the first surface to enable the side walls of the battery cells to be perpendicular to the base plate, and enable a joint between the force transferring member and the second surface to correspond to at least part of the side walls in an arrangement direction of the first surface and the second surface.

16. An apparatus for manufacturing a battery, the apparatus comprising:
a first provision device (11), configured to provide a base plate, the base plate comprising a first surface and a second surface;
a second provision device (12), configured to provide a plurality of battery cells, the battery cells each comprising a plurality of side walls;
a third provision device (13), configured to provide a force transferring member;
an assembling device (14), configured to arrange the force transferring member on the base plate, one end of the force transferring member being joined to the second surface and the other end of the force transferring member extending in a direction away from the second surface; wherein
the assembling device (14) is further configured to arrange the plurality of battery cells on the first surface to enable the side walls of the battery cells to be perpendicular to the base plate, and enable a joint between the force transferring member and the second surface to correspond to at least part of the side walls in an arrangement direction of the first surface and the second surface.
